# EUROPEAN PATENT APPLICATION

(11) **EP 1 319 461 A1**
(43) Date of publication of application: **18.06.2003**
(21) Application number: 02256271.4
(22) Date of filing: 11.09.2002
(51) Int. Cl.: B23K 9/127, B23K 9/10

(54) **Automatic arc welding apparatus and method of controlling**

(30) Priority: 14.12.2001 KR 2001079512
(71) Applicant: SAMSUNG ELECTRONICS CO. LTD., Suwon-city, Kyounggi-do 441-742 (KR)
(72) Inventor: Hong, Sung-Jin, Paldal-gu, Suwon-city, Kyungki-do (KR)
(74) Representative: Derry, Paul Stefan

(57) **Abstract**

Arc welding apparatus changes welding power in real time to achieve favourable welding quality. The welding apparatus includes a welding robot, a welding unit including a welding torch at an articulated portion of the robot mechanism, and a control unit. The control unit sets a welding profile in accordance with welding conditions and a welding path, and controls the robot mechanism and the welding unit in real time in accordance with the welding profile. The method includes setting a welding condition for a parent metal, setting a welding path on the parent metal, setting a welding profile and change factor (step size) in accordance with the welding condition and the welding path, and performing a welding operation in accordance with the welding profile. A favourable welding result is achieved regardless of the type of parent metal by controlling the welding power (voltage and/or current) in real time according to conditions of the parent metal, i.e. with feedback.

## Description

The invention relates to arc welding apparatus comprising: a robot mechanism supporting a welding unit including a welding torch; and a control unit for calculating a welding profile in accordance with welding conditions and a welding path.

The invention relates also to a method of controlling arc welding apparatus, the method comprising: setting welding conditions; setting a welding path on the parent metal; and setting a welding profile according to the welding condition and the welding path.

In a welding operation that uses an industrial robot, a parent metal is transferred to a jig in which the parent metal is then held. A start point and an end point of a welding line on the parent metal are inputted into the robot, and a welding torch is driven to perform a welding operation via a control unit according to a predetermined program stored therein.

Arc welding process is predominantly used in such operations. The arc welding process is designed to generate a large electrical current between a welding torch and a parent metal while feeding a wire to the welding torch to instantaneously melt the wire and the parent metal, thereby achieving a fusion bond therebetween. To perform the welding operation, predetermined welding parameters suitable for a particular type of parent metal and a fusing contact shape between parent metals to be welded are determined and inputted into a robot in advance. Such welding parameters include the welding current, the welding voltage, the distance between the welding torch and the parent metal, the wire feeding speed, and the welding torch weaving speed. The term "weaving motion" denotes a motion in which a welding robot moves along a linear or curvilinear welding path while oscillating from side to side, which increases the welding penetration possible with one pass along the path.

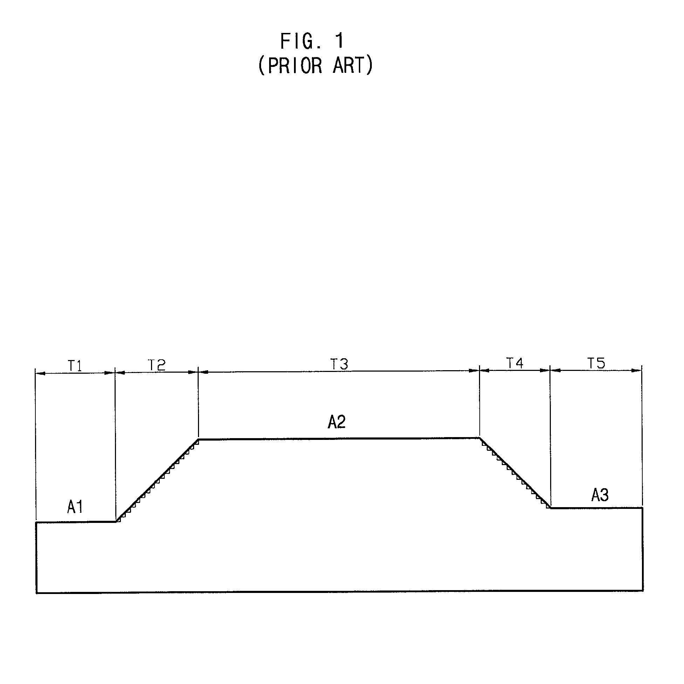

Figure 1 is a graph illustrating variation of current supply of a conventional arc welding apparatus. As shown in Figure 1, base current "A1" is supplied during a time period "T1" from a starting point of the welding process. After elapse of the time period "T1", the base current "A1" is increased in a stepwise fashion to a maximum current "A2" over a time period "T2". Here, a main welding procedure is performed while being supplied with the maximum current "A2" during a predetermined time period "T3". After the elapse of the time period "T3", the maximum current "A2" is stepwise decreased to a finishing current "A3" over a time period "T4". The finishing current "A3" is lower than the maximum current "A2" but higher than the base current "A1". At the end of the time period 'T5", the welding operation is completed. In the welding process, the base current "A1" and the finishing current "A3" generate arcs smoothly at the start and finish points of the welding operation.

As mentioned above, a conventional welding robot performs a welding operation with a base current, a maximum current and a finishing current previously determined according to types of a parent metal to be welded. Where an object material has a tapered shape (that is, where an object material is thin in places), an internal temperature of the object material can increase to a point where welding quality can be decreased by damage of the parent metal.

It is an aim of the present invention to provide arc welding apparatus and an control method thereof providing welds of a favourable welding quality.

Arc welding apparatus according to the invention is characterised in that the control unit is arranged for controlling the robot mechanism and the welding unit in real time according to the welding profile.

The method of the invention is characterised in that the method comprises performing a welding operation in real time in accordance with the welding profile

The invention also provides a method of controlling arc welding apparatus, the method comprising: determining a welding profile for a welding operation; and monitoring the parent metal during welding; the method being characterised by controlling the welding power while performing the welding operation in dependence thereon.

Embodiments of the invention will now be described, by way of example only, with reference to the accompanying drawings, of which:
Figure 1 is a graph illustrating variation of current supply of a conventional arc welding apparatus;
Figure 2 is a block diagram of an arc welding apparatus according to an embodiment of the present invention;
Figure 3 is a flow chart illustrating control of the arc welding apparatus of Figure 2;
Figures 4A to 4C are flow charts illustrating control of the arc welding apparatus of Figure 2; and
Figure 5A to 5E are graphs illustrating operation of the arc welding apparatus of Figure 2.

In the drawings, like reference numerals refer to like elements throughout.

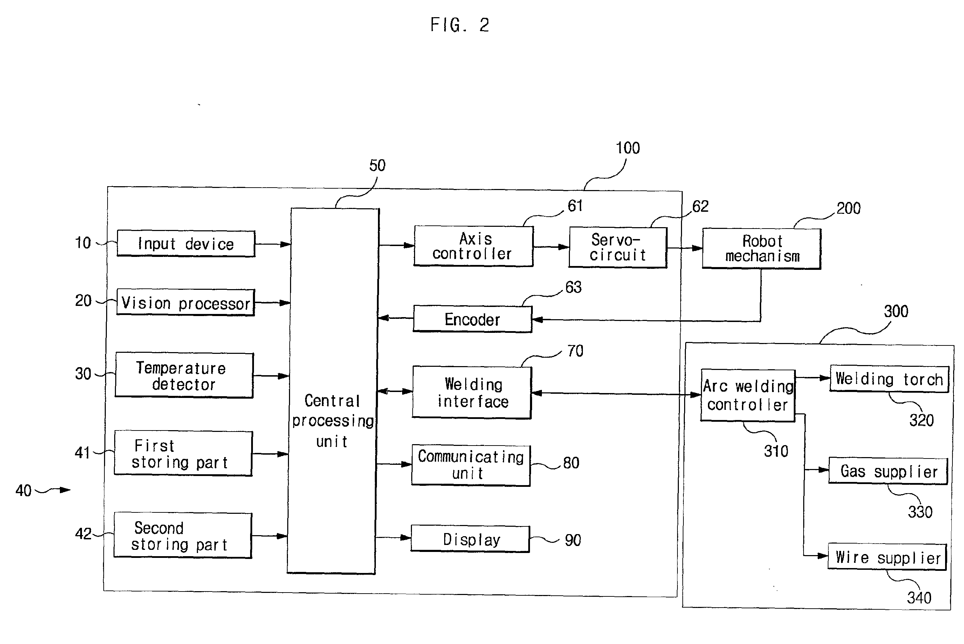

Figure 2 is a block diagram of an arc welding apparatus according to an embodiment of the present invention. Referring to Figure 2, the arc welding apparatus includes a welding robot mechanism 200, a welding unit 300 including a welding torch 320 at an articulated portion of the robot mechanism 200, a gas supplier 330, a wire supplier 340. An arc welding controller 310 is connected to control the welding torch 320, the gas supplier 330 and the wire supplier 340. The arc welding apparatus also includes a control unit 100 to control the robot mechanism 200 and the welding unit 300.

The control unit 100 includes a CPU (central processing unit) 50, which controls the entire operation of the arc welding apparatus. The CPU 50 is connected to an input device 10 having various input buttons to permit data and operation commands from an operator to be inputted into the CPU 50. In addition, the CPU 50 is connected to a vision processor 20 having a laser vision to calculate a welding path on a welding parent metal, and is connected to a temperature detector 30. The temperature sensor 30 detects the temperature of the parent metal, by contact or non-contact, and sends the detected temperature to the CPU 50.

The control unit 100 includes a storing unit 40, for storing data and programs, an axis controller 61, for controlling a robot, a welding interface 70, which is connected to the arc welding controller 310, a communicating unit 80, for communicating with external devices, and a display 90, for displaying operation information. All of the components included in the control unit 100 are connected to the CPU 50 via a bus. The control unit 100 also includes a servo-circuit 62 connected to the axis controller 61 for controlling a servo-motor (not shown) to drive individual axes of the robot mechanism 200.

The storing unit 40 includes a first storing part 41, for storing a control program, and a second storing part 42, for storing data and control parameters. The display 90 includes a CRT (cathode ray tube) or an LCD (liquid crystal display) for displaying the operational state of the robot mechanism 200. The axis controller 61 includes an interpolator (not shown) for controlling plural axes. The robot mechanism 200 includes a plurality of sensors (encoders not shown) at individual points of rotation of the robot mechanism 200. Data detected by the sensors is sent to the CPU 50 through an encoder 63, and the CPU 50 stores the received data in the second storing part 42. The communicating unit 80 is connected to external devices to receive programs, data commands and operational commands. The communication unit includes a serial communication unit, parallel communication unit, field bus communication unit and local area network (LAN) unit.

An arc welding process is described below.

First, a desired parent metal is held in a welding jig. The CPU 50 exerts control such as to perform a welding operation in accordance with previously stored data. Prior to initiation of the welding operation, a welding start point, a welding end point and a welding line of a welding area are verified, allowing any error in the welding start point, welding end point, and welding line to be compensated for. This is a well known operation. Is one method, a shape of a contacting area between parent metals with respect to a welding line, an approximate welding start point and welding end point are predetermined. The welding torch 320 is then disposed adjacent to the welding start point but separated slightly therefrom, and is subsequently moved relative to the parent metals. Contact between the welding torch and the parent metals is detected to determine the position of the parent metals. The welding line is then calculated on the basis of the determined position of the parent metals and the shape of the contacting area between the parent metals, which allows the welding operation to proceed along the welding line.

When the welding torch 320 is positioned at the welding start point, a wire is fed from the wire supplier 340 as an appropriate rate while shielding gas is fed from the gas supplier 330.

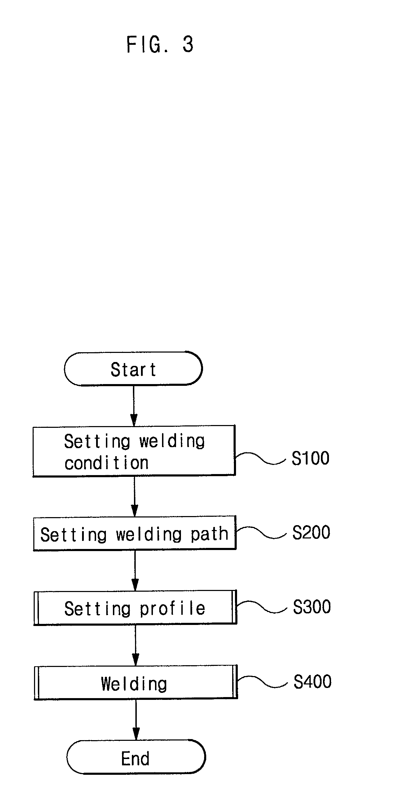

A control method for the arc welding apparatus will now be described with reference to Figure 3, which is a flow chart illustrating a control method of the arc welding apparatus as described in Figure 2. As shown in Figure 3, the CPU 50 determines desired welding parameters or conditions (S100). Welding conditions include information (in the form of numerical values) relating to the type of parent metal, the welding voltage, the electrical current, etc. Welding condition data is inputted through the input device 10 or the communicating unit 80, and the CPU 50 stores the inputted data in the second storing part 42.

After determining the welding conditions at operation (S100), the CPU 50 determines a weld path using the vision processor 20 (S200). The vision processor 20 calculates the welding path with laser vision and then sends the information concerning the welding path to the CPU 50. The CPU 50 determines the welding path, and stores data relevant to the determined welding path into the second storing part 42. The CPU 50 sets up a welding profile (S300) on the basis of the welding conditions determined at operation S100 and the data determined at operation S200, thereby allowing a welding operation to be fulfilled in accordance with the welding profile (S400).

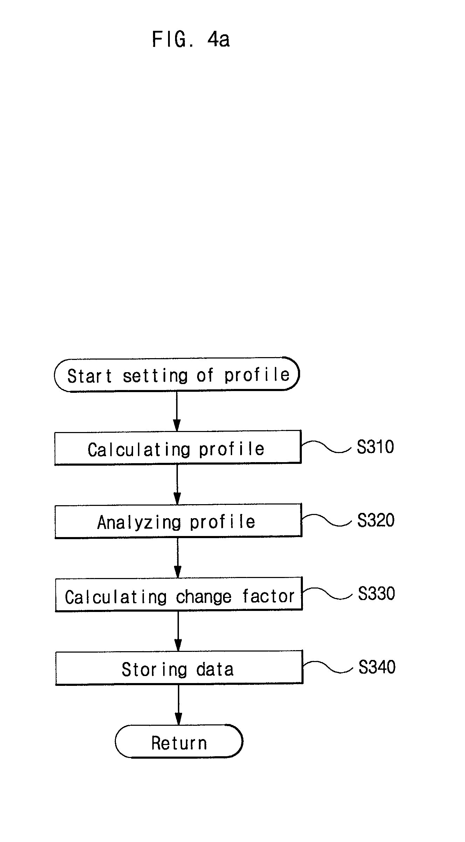

Figure 4A is a flow chart showing a set-up operation of the welding profile at operation S300. As shown in Figure 4A, data obtained from the welding path determined at operation S200 is loaded from the second storing part 42 by the CPU 50, thereby allowing a profile of welding voltage/welding current to be calculated based on the data (S310). The CPU 50 then performs an analysis of the calculated profile (S320), and subsequently calculates a change factor or factors (the step size for changing the voltage and/or current) in accordance with the analysis result at operation S330. The CPU 50 stores the calculated change factor or factors into the second storing part 43 (S340), and then returns to the start of the set-up operation.

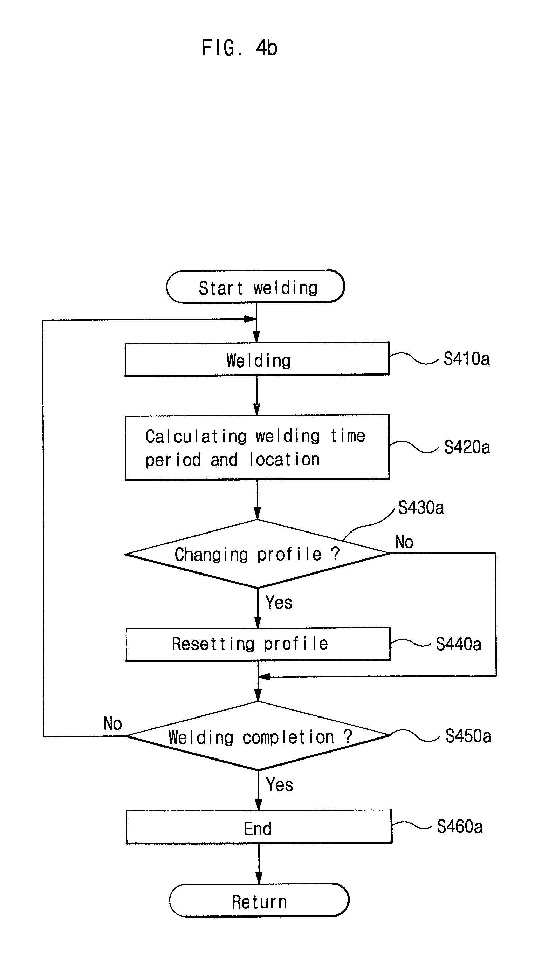

Figure 4B is a flow chart showing the welding operation of the welding profile at operation S400. Referring to Figure 4B, the CPU 50 performs a welding operation by appropriate control of the robot mechanism 200 and the welding unit 300 (S410a). First, the CPU 50 moves the welding torch 320 to the welding start point by controlling the servo-circuit 62 through the axis controller 61. Here, the encoder 63 processes output signals from sensors installed at respective points of rotation on the robot mechanism 200, and sends the output signals to the CPU 50. The CPU 50 accordingly determines the present location of the robot mechanism 200, and thus precisely positions the welding torch 320 at the welding start point by controlling the servo-circuit 62 through the axis controller 61.

When the welding torch 320 is positioned at the welding start point, the CPU 50 sends welding profile data to the welding unit 300 via the welding interface 70. The arc welding controller 310 controls the gas supplier 330 to enable gas to be supplied from the gas supplier 330, and after elapse of a predetermined time period (ΔT), allows electrical power to be applied to the welding torch 320. The wire supplier 340 supplies wire to replenish the wire consumed during welding. The robot mechanism 200 is controlled by the CPU 50 to perform the welding operation so that the welding torch 320 is moved along the welding path at a predetermined speed.

As the welding operation proceeds in the above-described way, the CPU 50 calculates the time required for the welding operation to complete, and determines the present welding location from output signals received from the encoder 63 (S420a). Thereafter, the CPU 50 determines whether or not the welding profile needs to be changed, based on the results of the received output signals (S430a). At operation S430a, the CPU 50 determines whether or not the present welding location determined by the output signals from the encoder 63 is different to that given by the welding profile, to detect whether or not the welding profile has been departed from. At operation S430a, if the present welding location is determined to have departed from the welding profile, the CPU 50 again sets up the welding profile by loading associated data stored in the second storing part 42 (S440a). The CPU 50 may instead determine from the elapsed welding time.

At step 540a, the CPU 50 determines whether or not the welding operation is completed. If it is completed, the CPU 50 sends a signal for indicating a completed welding operation to the arc welding controller 310. Subsequently, the arc welding controller 310 interrupts power applied to the welding torch 320, and after an elapse of a predetermined time period (ΔT), controls the gas supplier 330 to stop supply of gas and thus complete the welding operation (S460a).

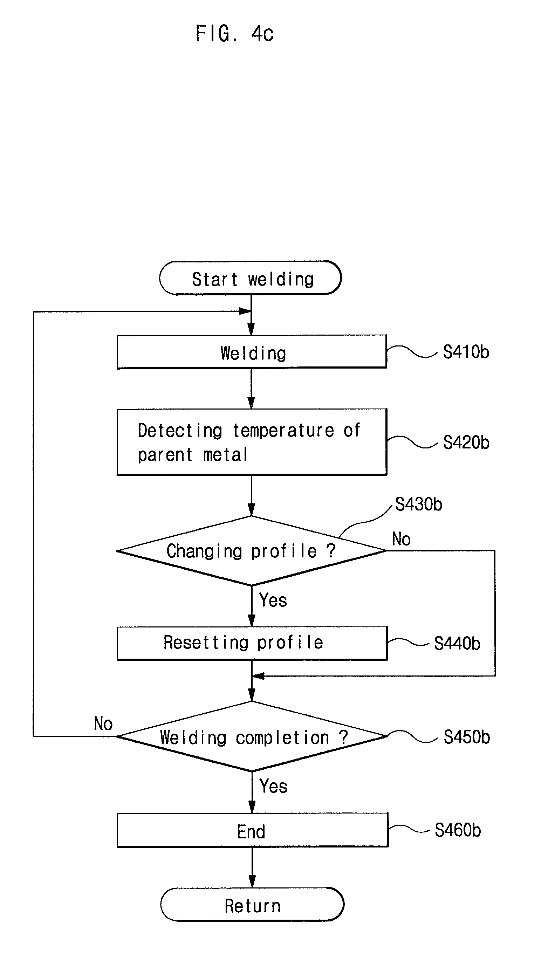

Figure 4C is a flow chart showing another example of the welding operation (S400). As shown in Figure 4C, the CPU 50 performs a welding operation while controlling the robot mechanism 200 and the welding unit 300. First, the CPU 50 moves the welding torch 320 to the welding start point by controlling the servo-circuit 62 through the axis controller 61. Here, the encoder 63 processes output signals from sensors installed at individual rotating positions of the robot mechanism 200, and sends the output signals to the CPU 50. This allows the CPU 50 to calculate the present location of the robot mechanism 200, and thus to locate precisely the welding torch 320 at the welding start point by suitable control of the servo-circuit 62 through the axis controller 61.

When the welding torch 320 is positioned at the welding start point, the CPU 50 sends welding profile data to the welding unit 300 via the welding interface 70. The arc welding controller 310 controls the gas supplier 330 to enable gas to be supplied from the gas supplier 330, and after an elapse of a predetermined time period (ΔT), allows electrical power to be applied to the welding torch 320. Then, the wire supplier 340 supplies a wire to replenish a wire consumed. Accordingly, the CPU controls the robot mechanism 200 to perform a welding operation so that the welding torch 320 is moved along the welding path at a predetermined speed.

As the welding operation proceeds in the above-described way, the CPU 50 detects the temperature of the parent metal (S420b). Thereafter, the CPU 50 determines whether or not the welding profile needs to be changed, based on the detected temperature of the parent metal (S430b). If the temperature of the parent metal detected at operation S430b is a different than that expected for the welding profile, the CPU 50 again sets up the welding profile by loading associated data stored in the second storing part 42 (S440b).

The CPU 50 determines whether or not the welding operation is completed (S450b). If the welding operation is completed, the CPU 50 sends a signal indicating completion of the welding operation to the arc welding controller 310 through the welding interface 70. Subsequently, the arc welding controller 310 interrupts power applied to the welding torch 320, and after an elapse of a predetermined time period (ΔT), controls the gas supplier 330 to stop supply of gas and complete the welding operation (S460b).

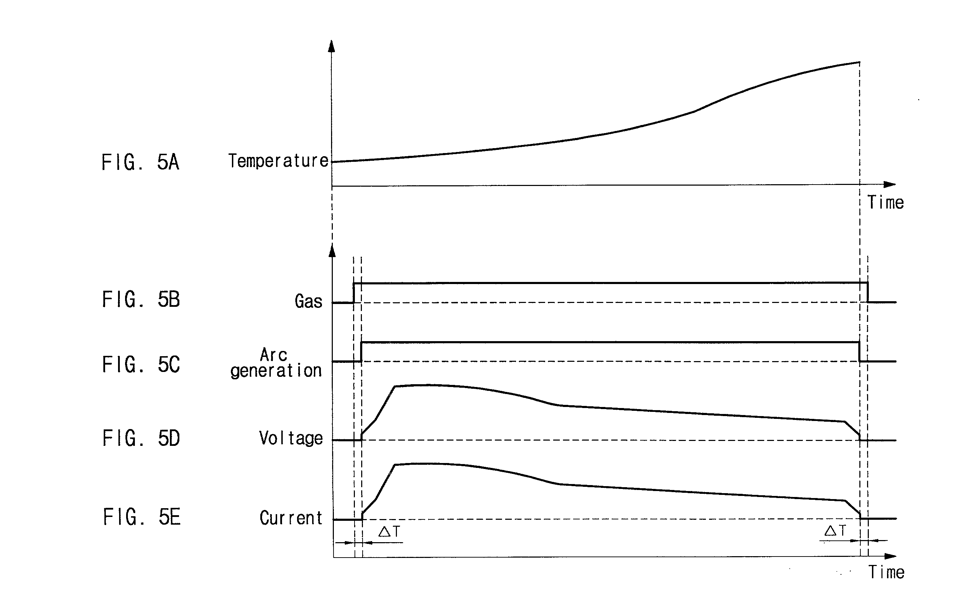

Figure 5A through 5E are graphs illustrating the welding operation of the arc welding apparatus shown in Figure 2. A welding profile is set for voltage (Figure 5D) and current (Figure 5E). A supply of gas is initiated (Figure 5B) and, after an elapse of a predetermined time period (ΔT), electric power (voltage/current) is applied. As the welding operation proceeds according to the welding profile, the temperature of the parent metal rises. When after the electric power is cut off, the predetermined time period (ΔT) elapses, the supply of gas is interrupted.

As shown in the graphs, locations at which the electric power (voltage/current) values change indicate changing points of the welding profile, i.e. points at which the welding profile was changed. The changing points are determined based on measurements of the temperature of the parent metal, the location of the welding torch, or the elapsed welding time.

In summary, the embodiment is concerned with arc welding apparatus in which a welding condition of a parent metal and a welding path on the parent metal is predetermined. A welding profile and change factors are set based on the welding conditions and the welding path so that a welding operation can be performed in accordance with the welding profile. The welding power of the arc welding apparatus is controlled in real time according to conditions relating to the parent metal, thereby enabling favourable results to be obtained regardless of the type of the welding parent metal.

## Claims

1. Arc welding apparatus comprising:
a robot mechanism (200) supporting a welding unit (300) including a welding torch (320); and
a control unit (100) for calculating a welding profile in accordance with welding conditions and a welding path, **characterised in that** the control unit is arranged for controlling the robot mechanism and the welding unit in real time according to the welding profile.

2. Arc welding apparatus as claimed in claim 1, in which the control unit is arranged to detect a departure from the welding profile, to change the welding profile in response thereto, and to control the robot mechanism and the welding unit according to the changed welding profile.

3. Arc welding apparatus as claimed in claim 2, in which the central unit is arranged to reset the welding profile when departure is detected.

4. Arc welding apparatus as claimed in any preceding claim, in which the control unit is arranged to predetermine a step size for each of one or more operating parameters of the welding torch, and to control the robot mechanism and the welding unit in accordance with the welding profile and the step size or sizes.

5. Arc welding apparatus as claimed in any preceding claim, wherein the welding unit comprises:
a gas supplier (330);
a wire supplier (340); and
an arc welding controller (310) for controlling the gas supplier, the wire supplier, and the power applied to the welding torch.

6. Arc welding apparatus as claimed in any preceding claim, wherein the control unit comprises:
a central processing unit (50);
an input device (10) having input buttons to permit operation commands and data to be inputted into the central processing unit;
a vision processor (20) for calculating the welding path;
an axis controller (61) for controlling a servo-circuit (62) to drive the robot mechanism;
an encoder (63) for detecting position signals from the robot mechanism and for sending the signals to the central processing unit; and
a welding interface (70) for connecting the central processing unit and the welding unit.

7. Arc welding apparatus as claimed in any preceding claim, wherein a or the vision processor (20) comprises a laser vision component.

8. Arc welding apparatus as claimed in any preceding claim, wherein the control unit comprises a contact or non-contact type sensor (30) for detecting the temperature of the parent metal.

9. Arc welding apparatus as claimed in any preceding claim, wherein the control unit comprises:
a communicating unit (80) for allowing communication of the central processing unit with external devices;
a display unit (40) for displaying operation information;
a first storing part (41) for storing a control program; and
a second storing part (42) for storing data and control parameters.

10. Arc welding apparatus as claimed in any preceding claim, wherein the welding profile is changed on detection that the temperature of the parent metal, the location of the welding unit, or the elapsed welding time has departed from the welding profile.

11. A method of controlling arc welding apparatus, the method comprising:
setting welding conditions (S100);
setting a welding path on the parent metal (S200); and
setting a welding profile (S300) according to the welding condition and the welding path;
the method being **characterised by** performing a welding operation (S400) in real time in accordance with the welding profile.

12. A method as claimed in claim 11, comprising detecting a departure from the welding profile, and changing the welding profile in response thereto.

13. A method as claimed in claim 12, wherein detecting step includes detection that the temperature of the parent metal, the location of the welding unit or the elapsed welding time has departed from the welding profile.

14. A method as claimed in claim 12, wherein the welding operation step comprises:
performing the welding operation according to the welding profile;
determining whether a present location, a detected temperature or elapsed welding time departs from the welding profile; and
in response to a positive determination, resetting the welding profile.

15. A method as claimed in any of claims 11 to 14, wherein the welding conditions are set dependent on the parent metal, and the welding profile comprises welding parameters including welding voltage and current.

16. A method as claimed in claim any of claims 11 to 15, wherein the welding path setting step path includes calculating a variation of the thickness of the parent metal.

17. A method of controlling arc welding apparatus, the method comprising:
determining a welding profile for a welding operation; and
monitoring the parent metal during welding;
the method being **characterised by** controlling the welding power while performing the welding operation in dependence thereon.

18. An arc welding apparatus comprising:
a robot mechanism;
a welding unit including a welding torch at a rotating position of the robot
mechanism; and
a control unit to set a welding profile in accordance with welding conditions and a welding path, and to control the robot mechanism and the welding unit in real time in accordance with the welding profile.

19. The arc welding apparatus as set forth in claim 18, wherein the welding unit comprises:
a gas supplier;
a wire supplier; and
an arc welding controller to control the gas supplier, wire supplier, and a power applied to the welding torch via the control unit.

20. The arc welding apparatus as set forth in claim 18, wherein the control unit controls the arc welding controller to control power applied to the welding torch in real time.

21. The arc welding apparatus as set forth in claim 18, wherein the control unit comprises:
a central processing unit;
an input device having input buttons to permit operation commands from an operator and data to be inputted into the central processing unit;
a vision processor to calculate the welding path on a parent metal;
an axis controller to control a servo-circuit to drive individual axes of the robot mechanism via control of the central processing unit;
an encoder to detect signals from the robot mechanism and send the signals to the central processing unit; and
a welding interface to connect the central processing unit and the welding unit.

22. The arc welding apparatus as set forth in claim 21, wherein the vision processor comprises a laser vision to calculate the welding path on the parent metal using a laser.

23. The arc welding apparatus as set forth in claim 21, wherein the control unit comprises a contact type temperature sensor or a non-contact type temperature sensor to detect temperature of the parent metal.

24. The arc welding apparatus as set forth in claim 21, wherein the control unit comprises:
a communicating unit to allow communication of the central processing unit with external devices;
a display unit to display operation information;
a first storing part to store a control program of the arc welding apparatus; and
a second storing part to store data and control parameters.

25. The arc welding apparatus as set forth in claim 24, wherein the communicating unit is connected to the external devices to receive programs, data and operational commands, and is selected from the group consisting of wireless communication, serial communication, parallel communication, field bus communication and local area network (LAN).

26. A method to control an arc welding apparatus comprising:
setting a welding condition for a parent metal;
setting a welding path on the parent metal;
setting a welding profile and change factor in accordance with the welding condition and the welding path; and
performing a welding operation in accordance with the welding profile.

27. The method to control an arc welding apparatus as set forth in claim 26, wherein the setting of the welding condition is previously set according to the parent metal, and comprises welding parameters including a welding voltage and an electric current to set the welding profile of the parent metal.

28. The method to control an arc welding apparatus as set forth in claim 26, wherein the setting of the welding path comprises:
calculating a variation of a thickness of the parent metal.

29. The method to control an arc welding apparatus as set forth in claim 26, wherein the setting of the welding profile comprises:
calculating the welding profile to control a welding power according to the welding condition and the welding path; and
calculating the change factor based on the calculated welding profile to control the welding power.

30. The method to control an arc welding apparatus as set forth in claim 26, wherein the performing of the welding operation comprises:
performing the welding operation according to the welding profile;
determining whether a present location is a changed location of the welding profile according to the change factor;
resetting the welding profile if the present location of the welding profile has changed;
determining whether the present location is a location to complete the welding operation; and
shutting off a welding power, and after an elapse of a predetermined time period, shutting off gas to complete the welding operation if the present location is the location to complete the welding operation.

31. The method to control an arc welding apparatus as set forth in claim 26, wherein the performing of the welding operation comprises:
performing the welding operation according to the welding profile;
detecting a temperature of the parent metal;
determining whether the detected temperature is a changed temperature of the welding profile according to the change factor;
resetting the welding profile if the detected temperature of the welding profile has changed;
determining whether the present location is a location to complete the welding operation; and
shutting off a welding power, and after an elapse of a predetermined time period, shutting off gas to complete the welding operation if the present location is the location to complete the welding operation.

32. The method to control an arc welding apparatus as set forth in claim 26, wherein the performing of the welding operation comprises:
performing the welding operation according to the welding profile;
determining whether a welding time of the welding profile has changed according to the change factor;
resetting the welding profile if the welding time of the welding profile has changed;
determining whether the welding time is a time to complete the welding operation; and
shutting off a welding power, and gas to complete the welding operation if the welding time is a time to complete the welding operation.

33. An arc welding apparatus for welding a parent metal, comprising:
a robot mechanism;
a welding unit including a welding torch at a rotating position of the robot mechanism;
a control unit to set a predetermined welding condition and welding path on the parent metal, set a welding profile and at least one change factor based upon the welding condition and the welding path, and control the robot mechanism and the welding unit in accordance with the welding profile and the at least one change factor.

34. The arc welding apparatus as set forth in claim 33, wherein the at least one change factor comprises a time period for the welding operation and a present welding location of the welding unit.

35. The arc welding apparatus as set forth in claim 34, wherein the control unit compares the time period and the present welding location with the welding profile and changes the welding profile according to the comparison.

36. The arc welding apparatus as set forth in claim 33, wherein the at least one change factor comprises a temperature of the parent metal.

37. The arc welding apparatus as set forth in claim 36, further comprising:
temperature sensors to determine a temperature of the parent metal, wherein the control unit compares the temperature of the parent metal with the welding profile and changes the welding profile according to the comparison.

38. A method to control an arc welding apparatus for welding a parent metal, comprising:
determining a welding profile for a welding operation of the parent metal;
determining states of the parent metal while performing the welding operation; and
controlling a welding power while performing the welding operation based upon the determined states.

39. An arc welding apparatus for welding a parent metal, comprising:
a robot mechanism;
a welding unit including a welding torch at a rotating position of the robot mechanism; and
a control unit to set a welding profile in accordance with a predetermined welding condition for the parent metal, detect a change in the welding profile based on the predetermined welding condition, and control the robot mechanism and the welding unit in real time in accordance with the change in the welding profile to perform a welding operation.

40. The arc welding apparatus as set forth in claim 39, wherein a change factor is used to detect the change in the welding profile.

41. The arc welding apparatus as set forth in claim 40, wherein the change factor is based on a change in temperature of the parent metal, a present location of the welding unit, or time.

42. The arc welding apparatus as set forth in claim 40, further comprising:
a determining unit to determine whether the present location is a changed location of the welding profile according to the change factor; and
a resetting unit to reset the welding profile if the present location relative to the welding profile has changed.

43. The arc welding apparatus as set forth in claim 40, further comprising:
a determining unit to determine whether the temperature is a changed temperature of the welding profile according to the change factor; and
a resetting unit to reset the welding profile if the temperature relative to the welding profile has changed.
